# EUROPEAN PATENT SPECIFICATION

(11) **EP 4 118 498 B1**
(45) Date of publication and mention of the grant of the patent: **28.01.2026**
(21) Application number: 20729726.8
(22) Date of filing: 29.05.2020
(51) Int. Cl.: G05B 19/042, H04L 67/00

(54) **PLANT CONTROL SYSTEM**
ANLAGENSTEUERUNGSSYSTEM
SYSTÈME DE COMMANDE D'INSTALLATION

(43) Date of publication of application: 18.01.2023
(73) Proprietor: Hach Lange GmbH, 14163 Berlin (DE)
(72) Inventor: DÖRKEN, Rainer, 41189 Mönchengladbach (DE); TEICHERT, Jörg, 45289 Essen (DE); SPARBIER, Jochen, 21063 Mönchengladbach (DE); GROBE, Michael, 40627 Düsseldorf (DE); STENERT, Michael, 46397 Bocholt (DE)
(74) Representative: Müller-Boré & Partner Patentanwälte PartG mbB
(86) International application number: PCT/EP2020/064960
(87) International publication number: WO 2021/239247

(56) References cited:
- EP-A1- 2 905 663
- WO-A1-2012/154650
- US-A- 4 747 100
- US-A- 4 888 726
- US-B1- 9 170 579

## Description

The present invention relates to the field of plant control systems and more particular to a system of controller devices for a plant control system.

Plant control systems are used for controlling at least one plant process, e.g., a water treatment process, running in at least one plant. Controller devices may provide an interface between process information devices, e.g., sensor devices that capture a parameter of the at least one plant process, and the plant control system controlling the plan process. In particular, a controller device processes the captured parameter and provides the processed parameter to the plant control system, e.g., to a programmable logic controller (PLC), and/or to a supervisory control and data acquisition (SCADA) enabled system, and/or to an actuator of the plant control system to control the plant process.

A plant control system usually has access to a variety of process information devices. Such process information devices may be fixedly installed at specific locations in the plant, e.g., a pressure sensor or nitrate sensor may be installed at a tank, and it might be desired to provide the information captured by a specific process information device also to other controller devices which are remotely installed from the specific process information device. However, due to the different geographic locations of the process information device and the controller device, it might be cumbersome to connect the process information device with the remotely installed controller device, i.e. providing an interface between the process information device and the remotely installed controller device
US 4 888 726 A describes a cluster of control processors interconnected by a local area network and exchanging data to carry out their control functions. Each control-ler executes a control program containing both conventional instructions and T-instructions which call for an operation on data maintained by another controller in the cluster. All data required to execute T-instructions is stored in a virtual I/O image table and each controller is responsible for keeping its section of this table up-to-date by periodically broadcasting its data on the local area network.

US 4 747 100 A describes a programmable controller which is adapted to communicate in a token passing logical ring network in a peer-to-peer fashion.

EP 2 905 663 A1 describes a device setting apparatus which includes a data transmission processor configured to automatically and collectively acquire information used in at least one another device setting apparatus as other-device information from an external storage and an other-device information storage storing the other-device information. The external storage is communicatively connectable to the device setting apparatus via a network.

WO 2019/152348 A1 relates to a method of determining a configuration state of an I/O module connected to a fieldbus controller. The method comprises the steps of receiving from the I/O module a key ID, comparing the key ID with at least one key ID stored on the fieldbus controller, and configuring the I/O module when the received key ID does not correspond to the at least one stored key ID stored. Further, a circuit for configuring a digital input of a fieldbus controller as either a PNP input or an NPN input is provided comprising a control circuit including a reference input, a first selection input, and a control output. The circuit also comprises a data circuit including a second selection input electrically connected to the control output, a data input electrically coupled to the digital input, and a data output.

US 9 170 579 B1 relates to a digital energy system which monitors and controls a plurality of industrial energy devices. The system includes a server and one or more interface devices coupled to the industrial energy devices. Each of the interface devices has a dynamically configurable runtime environment. The server sends configuration data to each of interface devices. The configuration data includes variable definitions that reference specific registers on the industrial energy devices.

The server monitors the industrial energy devices by obtaining values for one or more of the variables set forth in the variable definitions. To control an industrial energy device, the server sends a write request for the industrial energy device to the interface device with a value for a defined variable in the device definition for the industrial energy device.

Accordingly, it is an objective of the present invention to provide process information from one process information device to different controller devices. Further, it is an objective of the present invention to facilitate the configuration of a plant control system as well as its maintenance of the configuration.

This objective is solved by the subject matter of independent claim 1. Preferred embodiments are defined in the dependent claims.

Advantageously, it is possible to use the communication path or communication channel between the first controller device and the second controller device for providing the process information provided by the connectable process information device to the second controller device. Usually, the first controller device and the second controller device may be communicatively coupled via a network and thus, the network may be used to forward the process information from the first controller device to the second controller device. Accordingly, it is not required to additionally connect the process information device interfacing with the first controller device to the second controller device. In other words, the second controller device does not require to be physically connected or wirelessly connected to the connectable process information device, e.g., by an input port of the second controller device for interfacing with the connectable process information device.

As an example, the connectable process information device may be configured to capture a value or parameter of the at least one plant process running in the at least one plant and to provide the value or parameter as the process information associated with the plant process. In particular, the connectable process information device may be configured as a sensor device capturing the value or parameter of the at least one plant process. However, the connectable process information device is not limited to a sensor device. Instead the connectable process information device can be any device, which provides process information associated with the plant process running in the plant.

Further, the process information associated with the plant process may additionally comprise status information of the connectable process information device and prognosis information of the connectable process information device. Prognosis information may comprise a set of indicators, which characterize the status of the process information device in present and future times.

The first controller device comprises a first controller device-side interface configured to interface with the connectable process information device. The first controller device-side interface may be configured to exchange data or information with the connectable process information device. In particular, the process information associated with the plant process provided by the connectable process information device may be inputted through the first controller device-side interface to the first controller device. In other words, the first controller device-side interface may be communicatively connected with the connectable process information device through a wired and/or wireless connection, e.g., via a Profibus connection.

Further, the plant control system with which the second controller device interfaces might be a process automation system realised with programmable logic controllers (PLC) and/or a supervisory control and data acquisition (SCADA) enabled system. Accordingly, the second controller device may comprise a second controller device-side interface for interfacing with the plant control system. The second controller device-side interface may be adapted to the requirements of the plant control system. For example, the second controller device processes the obtained process information and outputs through the second controller-side interface processed information that are adapted to the requirements of the plant control system. For example, the plant control system might require that the processed information is an analogue value or a digital value representing the obtained process information.

Further, the second controller device may interface with the plant control system through a further controller device, e.g., a third controller device.

According to the invention, the first controller device obtains configuration information from at least one and preferably from a plurality of connectable process information devices interfacing with the first controller device. Further, the first controller device maintains a first controller device-side configuration of connectable process information devices interfacing with the first controller device, wherein the first controller device-side configuration comprises the configuration information of each connectable process information device that is connected with or interfacing with the first controller device.

Advantageously, the first controller device-side configuration allows the first controller device to provide an overview of all connectable process information devices that are connected to the first controller device, i.e., all connectable process information devices with which the first controller device is interfacing. Said overview may be provided to other controller devices, e.g. to the second controller device and/or third controller device.

Moreover, not only the first controller device is configured to obtain configuration information from its connected connectable information process devices. Rather, each controller device in a plant control system may obtain configuration information from its connected connectable information process devices and store said configuration information in a corresponding controller device-side configuration.

As noted above, the controller devices, e.g., the first controller device, is configured to obtain configuration information from each connectable process information device that is connected to the respective controller device. Accordingly, each connectable process information device may provide its own configuration information to a connected controller device, e.g., to the first controller device.

The configuration information may include information allowing a controller device, e.g., the first controller device, to communicate with the connectable process information device(s) and to configure the respective connectable process information device at the controller device, e.g. the first controller device, and particularly at the controller device-side interface, e.g., at the first controller device-side interface of the first controller device. For example, the configuration information may allow the first controller device to read the sensor value, the status information and/or the prognosis information from the connectable process information device.

In one example, the configuration information may comprise an identifier (ID) for identifying the connectable process information device. A controller device, e.g., the first controller device and/or the second controller device, can match the **ID** with configurations that are pre-stored in the controller device and the controller device can configure the connectable process information device based on the pre-stored configuration that matches the ID.

In another example, the configuration information of the connectable process information device may comprise driver information for configuring the connectable process information device. The controller device, e.g., the first controller device and/or the second controller device, may use the driver information to configure the connectable process information device at the controller device.

Preferably, the first controller device-side configuration may comprise the configuration information of each connectable process information device interfacing with the first controller device. Accordingly, it is possible to forward the configuration information of the connected connectable process information devices to other controller devices, e.g. to the second controller device or to a cloud-based service.

The second controller device is configured to obtain the first controller device-side configuration of the first controller device and configured to maintain a virtual connectable process information device associated with the connectable process information device interfacing with the first controller device based on the first controller device-side configuration.

Accordingly, it is possible to create at the second controller device the virtual connectable process information device based on the configuration information of the connectable process information device connected to the first controller device. That is, it is possible to create a remote copy of the connectable process information device connected to the first controller device at the second controller device.

The second controller device is configured to store, on the virtual connectable process information device, the obtained process information as virtual process information associated with the plant process and to process the virtual process information for providing to the plant control system the processed information associated with the plant process.

Accordingly, the virtual process information may represent a copy of the process information associated with the plant process provided by the connectable process information device to the first controller device. Thus, the second controller device can provide processed information associated with the at least one plant process to the plant control system although the second controller device does not (directly) interface with the connectable process information device connected to the first controller device.

Preferably, the first controller device and the second controller device may be configured to equalise the data between the connectable process information device connected to the first controller device and the virtual process information device at the second controller device.

For example, the second controller device may request from the first controller device the process information provided by the connectable process information device connected to the first controller device. In response to the request of the second controller device, the first controller device may provide the process information associated with the plant process to the second controller device and the second controller device may store the received process information as the virtual process information.

Further, in response to the request of the second controller device for requesting the process information, the first controller device may forward the process information already stored at the first controller device or the first controller device reads the process information from the connected connectable process information device and forwards the read process information to the second controller device.

Preferably, the second controller device may maintain the virtual process information associated with the process until updating the virtual process information. Accordingly, it can be assured that process information associated with the plant process are available at the second controller device at any time. Thus, in case the plant control system requests processed information from the second controller device, the second controller device can provide the processed information immediately without first requesting process information from the first controller device. Hence, the second controller device can respond to a request from the plant control system in real-time.

Additionally or alternatively to providing process data from the virtual process information device, the second controller device may be configured to provide an output port having an output port configuration that is also included in the controller device-side configuration. Further, the second controller device may be configured to process the virtual process information of the virtual process information device and to provide the processed virtual process information at the output port, in the following referred to as output port information associated with the plant control process. Accordingly, the second controller device may provide its controller device-side configuration to other controller devices, e.g., the third controller device, and the other controller may create a virtual process information device that is associated with the output port. Further, the other controller device may request the output port information and store the output port information as virtual process information at its virtual process information device to provide the processed virtual process information as processed information to the plant control system.

Preferably, the first controller device, the second controller device and in particular the third controller device may be communicatively coupled through a network, in particular through a local area network. Further, the first controller device and/or the second controller device and/or the third controller device may include a topology manager configured to identify other controller devices in the network or local area network and to store information regarding the identified other controller devices. The information regarding the identified other controller devices may comprise network address information, e.g., host name and/or IP address, and/or an identification number of each of the identified other controller devices.

Advantageously, the topology manager of each controller device allows to scan for other controller devices in the network or local area network. In particular, the topology manager allows to scan for other controller devices that are present in the same subnet of a network or in the same local area network. The topology manager may use a Domain Name System (DNS) service, e.g., multicast DNS (mDNS), to identify the other controllers.

Further, the controller devices, e.g., the first, second or third controller device, may communicate with each other using the TCP/IP protocol family. Moreover, controller devices, e.g., the first, second and third controller devices may be connected to the network or local area network wired and/or wireless.

Alternatively, each controller device in a network, local area network, or subnet of a local area network may comprise a static configuration of the other controller devices in the network, local area network, or subnet of the local area network. The static configuration may provide information, e.g., network address information, for communicating with the other controller devices.

Preferably, the topology manager can update the stored information regarding the identified other controller devices upon detecting a change in the local area network and/or a period of time has lapsed. Thus, the controller devices, e.g. the first, second or third controller device, can keep the information regarding the identified other controller devices up to date. For example, if the topology manager of the second controller device detects that the network address of the first controller device has changed, the second controller device's topology manager can update the information regarding the other identified controller devices, e.g., the first controller device and in particular the network address of the first controller.

The second controller device may use the updated information regarding the other identified controller devices for communication with the other controller devices, e.g., with the first controller device. In particular, the second controller device may obtain the process information from the first controller device based on the updated information regarding the other identified controller devices.

Preferably, the topology manager of the second controller device may obtain the first controller device-side configuration based on the information regarding the identified other controller devices. In general, the topology manager of each of the controller devices is configured to obtain the controller device-side configuration of the other controllers contained in the information regarding the identified other controller devices. For example, the topology manager of the second controller device may obtain the controller device-side configuration of each of the other identified controller devices.

Further, the topology manager may identify changes in the obtained first controller device-side configurations with respect to previously obtained first controller device-side configurations and may adapt the configuration of the virtual connectable process information device accordingly. For example, if the connectable process information device is reconnected from the first controller device to a third controller device, the second controller device can identify that the connectable process information device is connected to a different controller device by the **ID** of the connectable process information device. Further, the second controller device may update the configuration of the virtual connectable process information device so that the process information is obtained from the new controller device, i.e., the third controller device.

Moreover, the information regarding the identified other controller devices may comprise network address information of the other controller devices. The controller devices, e.g. the second controller device, may use said network address information to communicate with the other controller devices and to request from the other controller devices the respective controller device-side configurations or to obtain process information of connectable process information devices connected to the respective controller devices or to obtain output port information of respective output ports provided at a controller device.

Preferably, the controller devices, e.g. the first, second and/or third controller device, may be communicatively coupled to a cloud-based service storing information regarding controller devices that are communicatively coupled to the cloud-based service. Further, each of the controller devices in the plant control system may provide its controller device-side configuration to the cloud-based service. For example, the first controller device may provide the first controller device-side configuration to the cloud-based service.

Coupling the first controller device and the second controller device to a cloud-based service is particularly useful for cases where the first controller device and the second controller device are not participants of a local area network or subsegment of a local area network. In cases where the first controller device and the second controller device are not participants of the same local area network or the same subsegment of a local area network, it might be difficult for the topology manager to identify other controller device(s).

Further, the controller devices coupled to the cloud-based service, e.g., the first, second and/or third controller device, may provide their controller device-side configuration to the cloud-based service. Moreover, each of the controller devices, e.g., the first, second and/or third controller device, may also provide their information regarding identified other controller devices to the cloud-based service. Preferably, all controller devices coupled to a cloud-based service and that belong to one system may provide their controller device-side configuration to the cloud-based service. Accordingly, the cloud-based service can maintain topology information of all coupled controller devices and preferably of their configurations with respect to connected connectable information process devices and/or output ports. That is, the cloud-based service holds information, e.g. network address information, of all controller devices coupled to the cloud-based service and preferably configuration information, e.g., the controller device-side configuration, of the connectable process information devices connected to the respective controller devices and of output ports provided by the respective controller devices.

Preferably, each controller device coupled to the cloud-based service can obtain the topology information from the cloud-based service and preferably the configuration information of the other coupled controller devices. For example, the second controller device may obtain from the cloud-based service the topology information including network address information with respect to the first controller device and preferably the first controller device-side configuration. In particular, the second controller device may request the cloud-based service to provide the first controller device-side configuration. In response, the cloud-based service may provide the first controller device-side configuration to the second controller device with which the second controller device can maintain the virtual process information device. Alternatively, the second controller device may obtain the first controller device-side configuration from the first controller device instead from the cloud-based service.

Preferably, the first controller device may interface with the connectable process information device via interfacing means that are different from a local area network or wide area network. For example, the interfacing means may be of a wired type, e.g., Profibus, or wireless. That is, the first controller device and the second controller device may act as a gateway between the process information device connected to the first controller device and the plant control system interfacing with the second controller device.

Preferably, the controller devices, e.g., the first, second and/or third controller device, and/or the cloud-based service may provide a user interface. The user interface may be accessed through a web browser by a user and may allow a user to configure the controller devices, e.g., the first, second and/or third controller devices. For example, the user interface may allow the user to configure a virtual process information device at the second controller device and to associate the virtual process information device with a connectable process information device connected to a different controller device, e.g., the first controller device. Moreover, the use interface may allow a user to create an output port at a controller device and to associate the output port with processed virtual process information of a virtual process information device of the same controller device.

Advantageously, the user interface may allow the user to configure a controller device without having knowledge of the topology of the available controller devices and their connected process information devices. In particular, the user interface may allow to configure a controller device by referring to the information regarding the identified other controller devices and the controller device-side configuration of the identified other controller devices. Accordingly, the user interface may present to the user the available process information devices, i.e., the process information devices that are contained in the controller device-side configurations of the identified other controller devices, and allow to associate a virtual process information device with one or more of the available process information devices. Advantageously, the presentation of the available process information devices may be detached from the topology of the identified controller devices. That is, the user is not required to know to which controller device the to be associated process information device is connected to.

Further, the user interface on each controller device and/or cloud-based service may provide to the user a similar look and feel so that the user interface facilitates configuring of the controller devices.

A further aspect relates to a controller device for a plant control system for controlling at least one plant process running in at least one plant, the controller device being configured to:
interface with at least one connectable process information device, the connectable process information device providing to the first controller device process information associated with the plant process running in the plant, and
provide to another controller device the process information associated with the plant process running in the plant, the another controller device interfacing with the plant control system and configured to process the provided process information and to provide to the plant control system processed information associated with the plant process.

Further, the controller device may include additional features as disclosed above with respect to the first controller device.

A further aspect relates to a controller device for a plant control system controlling a plant process running in a plant, the controller device comprising:
a first interface to be communicatively coupleable to another controller device to obtain process information associated with the plant process running in the plant, the process information being associated with the plant process being provided by a connectable process information device interfacing with the another controller device, and
a second interface to the plant control system,
the controller device being configured to process the obtained process information and to provide to the plant control system processed information associated with the plant process.

Further, the controller device may include additional features as disclosed above with respect to the second controller device.

A further aspect relates to a system of controller devices for a plant control system controlling at least one plant process running in at least one plant, the system comprising:
first and second controller devices communicatively coupled with each other,
wherein the first controller device is configured to interface with at least one connectable process information device, the connectable process information device providing to the first controller device process information associated with the at least one plant process running in the plant,
wherein the second controller device is configured to:
   obtain from the first controller device the process information provided by the connectable process information device to the first controller device,
   interface with the plant control system, and
   process the obtained process information and to provide to the plant control system processed information associated with the at least one plant process.

Further, the system and in particular the first and second controller devices may include additional features as disclosed above with respect to the first controller device and second controller device.

A further aspect relates to a method for providing processed information associated with at least one plant process running in a plant, the method comprising:
obtaining from a connectable process information device process information associated with the at least one plant process running in the plant,
providing the obtained process information to a first controller device,
obtaining by a second controller device being communicatively coupled with the first controller device from the first controller device the process information provided by the connectable process information device to the first controller device,
processing by the second controller device the obtained process information, and
providing by the second controller device processed information associated with the at least one plant process to the plant control system.

The method may include further features as disclosed above with respect to the other aspects.

These and other objects, features and advantages of the present invention will become more apparent upon reading of the following detailed description of preferred embodiments and accompanying drawings. It should be understood that even though embodiments are separately described, single features thereof may be combined to additional embodiments.
- Figure 1: depicts a plant control system comprising a system of controller devices, and
- Figure 2: depicts a plant control system comprising a system of controller devices that are coupled to a cloud-based service.

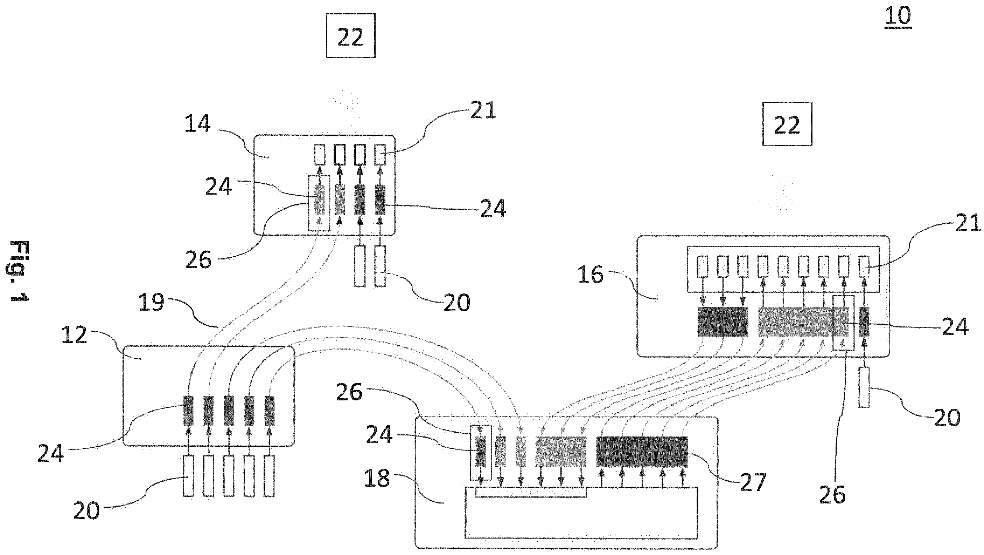

Figure 1 shows a plant control system 10 for controlling at least one plant process in at least one plant. The plant control system 10 comprises first controller device 12, second controller device 14, third controller device 16 and fourth controller device 18. First controller device 12 to fourth controller device 18 may be communicatively coupled with each other through a network (not shown), e.g., a local area network (LAN) and/or wide area network (WAN). That is, first controller device 12 to fourth controller device 18 communicate through the network. Further, first controller device 12 to fourth controller device 18 may be connected to the network wired and/or wirelessly and may communicate through the network by using the TCP/IP protocol family.

As shown in figure 1, first controller device 12 interfaces with a connectable process information device 20. Connectable process information device 20 provides process information associated with the plant process running in the plant. For example, connectable process information device 20 is a sensor device which captures a value or parameter of the plant process and which provides the captured value or parameter as the process information associated with the plant process.

Moreover, second controller device 14 interfaces with the plant control system 10. For example, second controller device 14 interfaces with a programmable logic controller (PLC) and/or a supervisory control and data acquisition (SCADA) enabled system 22. Further, as indicated by the arrow 19 from the first controller device 12 to the second controller device 14, the second controller device 14 obtains from the first controller device 12 the process information provided by the connectable process information device 20 to the first controller device 12. Moreover, the second controller device 14 processes the obtained process information and provides processed information associated with the plant process to the plant control system 10, for example via PLC and/or SCADA 22. Further, second controller device 14 may have an input/output port (I/O port) 21 through which the processed information associated with the plant process can be provided to the plant control system, e.g., to the PLC or SCADA. Accordingly, the plant control system 10 can control the plant process based on the processed information.

Further, the connectable process information device 20 provides configuration information to the first controller device 12. The configuration information allows the first controller device 12 to interface with the connectable process information device 20. For example, the configuration information allows the first controller device 12 to read the captured value or parameter from the connectable process information device 20.

The configuration information can be a unique identifier (ID) which uniquely identifies the connectable process information device 20. Controller devices 12 to 18 may have pre-stored configurations of possible connectable process information devices and may match the **ID** with the pre-stored configurations. A prestored configuration matching the **ID** may be used to configure the connected connectable process information device 20 at the respective controller device 12 to 18.

Alternatively, the connectable process information device 20 provides driver information as configuration information and the driver information is used by a controller device 12-18 to configure the connectable process information device 20 at the respective controller device 12-18.

Further, each of the controller devices 12 to 18 may have or be associated with a controller device-side configuration. The controller device-side configuration may include at least configuration or topology information of the attached and/or connected connectable process information devices 20, i.e., the connectable process information devices 20 with which the respective controller device 12 - 18 is interfacing. Connectable process information devices 20 may interface with the respective controller devices 12 to 18 wired or wirelessly but the connectable process information devices 20 may not be connected to the network. That is, the connectable process information devices 20 may interface with the respective controller devices 12 to 18 through a different communication path as the network.

Further, each controller of the first to fourth controller devices 12 -18 may have storage means 24, e.g. a (data) cache. The storage means 24 may allow storing of process information provided by the respective connectable process information devices 20 connected to a controller device. Thus, the storage means 24 may be an input storage means for storing of the process information provided by the respective connectable process information devices 20. For example, first controller device 12 may store process information of connected process information device 20 in the storage means 24 of the first controller device 12 and second controller device 14 may store process information of connected process information device 20 in the storage means 24 of the second controller device 24. Further, the second controller device 14 may be configured to process the process information stored in storage means 24 and to output processed information to the PLC/SCADA 22 via I/O port 21. For example, the process information stored in the storage means 24 of the second controller device 14 may be a digital representation of a temperature value obtained with process information device 20 and the second controller device may control the I/O port 21 to output an analogue signal corresponding to the digital representation of the temperature.

Moreover, each of the controller devices 12 to 18 may comprise a topology manager which might be executed on the controller devices 12 to 18 as a service. The topology manager may identify other controller devices 12 to 18 in the network. For example, the topology manager of the second controller device 14 may identify first controller device 12, third controller device 16 and fourth controller device 18. In particular, the topology manager may identify controller devices which are located in the same LAN or subnet of a network. For identifying other controller devices, the topology manager may use a domain name system (DNS) server, e.g., multicast-DNS.

Further, the topology manager may store information regarding the identified other controller devices on the respective controller devices 12 to 18. Referring to figure 1, the topology manager of first controller device 12 may store information regarding the identified other controller devices with respect to second controller device 14, the third controller device 16 and the fourth controller device 18. Information regarding the identified other controller devices may include an identification number and a network address, e.g., a hostname and/or IP address of the other controller devices.

Moreover, the topology manager may be configured to obtain from the controller devices contained in the information regarding the identified other controller devices their controller device-side configuration. Accordingly, the topology manager of each controller device 12 to 18 has information of the other controller devices and the connectable process information devices 20 connected to the other controller devices.

Referring to figure 1, the topology manager of the second controller device 14 may send a request message to the first controller device 12. The request message may request topology information from the first controller device 12, in particular information regarding the connectable process information devices 20 connected to the first controller device 12. In response to the request message, first controller device 12 provides a response message to the topology manager of the second controller device 14, wherein the response message includes information regarding the connectable process information devices 20 connected to the first controller device 12, i.e., the controller device-side configuration of the first controller device 12.

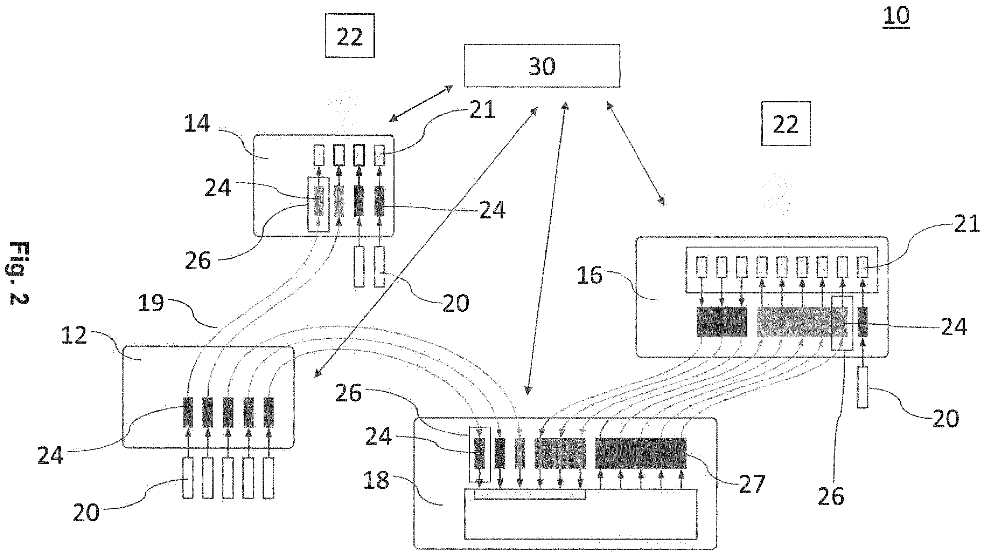

Based on the topology information, the second controller device 14 may allow configuring and/or maintaining a virtual connectable process information device 26 which is associated with the connectable process information device 20 interfacing with the first controller device 12. For simplicity, figures 1 and 2 only show one virtual process information device 26. Further, the second controller device 14 may store the process information obtained from the first controller device 12 to storage means 24, e.g., a cache, associated with the virtual connectable process information device 26. The second controller device 14 may process the process information stored in storage means 24 associated with the virtual connectable process information device 26 for providing the processed information to the plant control system 10.

Referring to figure 1, the second controller device 14 may send a request message to the first controller device 12 requesting the process information provided by the connectable process information device 20. In response to the request message, the first controller device 12 may send a response message to the second controller device 14, wherein the response message includes the process information provided by the connectable process information device 20. The second controller device 14 may store the process information received with the response message to the storage means 24 associated with the virtual connectable process information device 26.

Further, the process information received with the response message is maintained/stored in the storage means 24 associated with the virtual connectable process information device 26 until an update of the process information is requested by the second controller device 14 by sending a new request to first controller device 12. Accordingly, processed information can be provided to the plant control system 10 immediately without the need to initiate a request of process information from the first controller device 12. That is, the processed information can be provided in real time from the second controller device 14 to the plant control system 10.

Further, a controller device, e.g., the fourth controller device 18 may also obtain topology information from the first controller device 12 similar to the second controller device 14. Further, the fourth controller device 18 may be configured to create a virtual process information device 26 that is associated to a connectable process information device 20 of another controller device, e.g., the connectable process information device 20 of the first controller device 12. Further, the fourth controller device 18 may provide an output port 27 and associate the output port with its virtual process information device 26. In particular, the fourth controller device 18 may store process information of the process information device 20 connected to the first controller device 12 in storage means 24 associated with the virtual process information device 26 as virtual process information. Further, the fourth controller device 18 may process the virtual process information of the virtual process information device 26 and provide the processed virtual process information as output port information associated with the plant process to output port 27. For example, output port 27 may also have storage means (not shown) for storing the output port information. Further, the fourth controller device 18 may maintain and/or provide configuration information regarding the output port 27 into its controller device-side configuration.

Accordingly, another controller device, e.g., third controller device 16 in figure 1, may create and/or maintain a virtual process information device 26 that is associated with the output port 27 of the fourth controller device 18. Likewise, the output port information of the output port 27 may be requested from the third controller device 16 and stored as virtual process information in the storage means 24 associated with the virtual process information device 26. Third controller device 16 may process the virtual process information to provide processed information through I/O port 21 to the plant control system 10 via PLC and/or SCADA 22.

By implementing the above teaching, it is possible to make process information of a connectable process information device available at any controller device 12 to 18 of the plant control system 10. Further, process information of different connectable process information devices interfacing with different controller devices may be made available to other controller devices. This provides flexibility in configuring and maintaining a plant control system. Further, installation costs for a plant control system can be reduced because process information obtained by connectable process information devices can be made available to all controller devices that are communicatively coupled.

Figure 2 depicts a modification of the plant control system 10 shown in figure 1 and further shows a cloud-based service 30 to which the first to fourth controller devices 12 to 18 are coupled or registered. Further, the first to fourth controller devices 12 to 18 may be located in different LANs or in different subnets, and it might be difficult for the controller devices 12 to 18 to identify each other. Accordingly, the cloud-based service 30 may request from each controller device 12 to 18 coupled to the cloud-based service 30 topology information. In response to the request of the cloud-based service 30, each of the controller devices 12 to 18 provides its controller device-side configuration to the cloud-based service 30.

Further, each of the controller devices 12 to 18 may also provide the information regarding the identified controller devices to the cloud-based service. Accordingly, the cloud-based service 30 may have a topology overview of all controller devices 12 to 18 and their controller device-side configuration of the plant control system 10. Further, the cloud-based service 30 may provide said topology overview to the controller devices 12 to 18 in the plant control system 10 so that the controller devices 12 to 18 are aware of each other. The topology overview also provides network address information of the controller devices so that the controller devices are enabled to communicate with each other. In case no direct network communication is possible between the controller devices 12 to 18, e.g., due to security restrictions and/or firewalls between the controller devices 12 to 18, the cloud-based service may serve as a relay relaying the communication between the controller devices 12 to 18.

Moreover, the cloud-based service 30 and/or each of the controller devices 12 to 18 may provide a user interface which is accessible for a user, for example via an Internet browser. The user interface may give the user the possibility to create virtual process information devices 26 at a specific controller device, e.g. the second controller device 14, and to associate the created virtual process information device 26 with a connectable process information device 20 connected to a different controller device, e.g., connectable process information device 20 connected to the first controller device 12. Moreover, the user interface may allow to associate an output port 27 of controller device, e.g., the fourth controller device 18, to be associated with a virtual process information device 26 of the respective controller device, e.g., virtual process information device 26 of the fourth controller device 18.

### List of reference numerals

- 10: plant control system
- 12: first controller device
- 14: second controller device
- 16: third controller device
- 18: fourth controller device
- 19: data flow/communication between the first and second controller device
- 20: connectable process information device
- 21: I/O port
- 22: programmable logic controller (PLC) / supervisory control and data acquisition (SCADA) enabled system
- 24: storage means (input)
- 26: virtual process information device
- 27: storage means (output port)
- 30: cloud-based service

## Claims

1. A system of controller devices (12, 14) for a plant control system (10) controlling at least one plant process running in at least one plant, the system comprising:
first and second controller devices (12, 14) communicatively coupled with each other,
wherein the first controller device (12) is configured to:
interface with at least one connectable process information device (20), the at least one connectable process information device (20) providing to the first controller device (12) process information associated with the at least one plant process running in the plant,
obtain configuration information from the at least one connectable process information device (20) interfacing with the first controller device (12), and
maintain a first controller device-side configuration of connectable process information devices interfacing with the first controller device (12), wherein the first controller device-side configuration comprises the configuration information,
wherein the second controller device (14) is configured to:
obtain the first controller device-side configuration (24) of the first controller device (12) and to maintain a virtual connectable process information device (26) associated with the at least one connectable process information device (20) interfacing with the first controller device (12) based on the first controller device-side configuration,
obtain from the first controller device (12) the process information provided by the at least one connectable process information device (20) to the first controller device store, on the virtual connectable process information device (26), the obtained process information as virtual process information associated with the plant process,
interface with the plant control system (10),
process the virtual process information, and
provide to the plant control system (10) the processed information associated with the at least one plant process.

2. The system of claim 1, wherein the second controller device (14) is configured to maintain the virtual process information associated with the process until updating the virtual process information.

3. The system of any one of the preceding claims, wherein the first controller device (12) and the second controller (14) device are communicatively coupled through a network, in particular through a local area network, and
the first controller device (12) and the second controller device (14) include a topology manager configured to identify other controller devices (12, 14, 16, 18) in the local area network and to store information regarding the identified other controller devices.

4. The system of claim 3, wherein the topology manager is configured to update the stored information regarding the identified other controller devices upon detecting a change in the local area network and/or a period of time has lapsed.

5. The system of claim 3 or 4, wherein the topology manager of the second control-ler device (14) is configured to obtain the first controller device-side configuration based on the information regarding the identified other controller devices.

6. The system of any one of claim 1 or 2, wherein the first controller device (12) and the second controller device (14) are communicatively coupled to a cloud-based service (30) storing information regarding controller devices communicatively coupled to the cloud-based service, and
wherein the first controller device (12) is configured to provide the first controller device-side configuration to the cloud-based service (30).

7. The system of claim 6, wherein the second controller device (14) is configured to obtain from the cloud-based service (30) the first controller device-side configuration.

8. The system of any one of claims 1 to 7, wherein the first controller device (12) is configured to interface with the at least one connectable process information device (20) via interfacing means that are different from a local area network or wide area network.

9. The system of any one of claims 3 to 8, wherein the information regarding the identified other controller devices comprise address information of the other controller devices.

## Patentansprüche

1. System von Controllervorrichtungen (12, 14) für ein Anlagensteuerungssystem (10), das mindestens einen Anlagenprozess steuert, der in mindestens einer Anlage läuft, wobei das System umfasst:
eine erste und eine zweite Controllervorrichtung (12, 14), die kommunikativ miteinander gekoppelt sind,
wobei die erste Controllervorrichtung (12) ausgebildet ist zum:
Koppeln mit mindestens einer verbindbaren Prozessinformationsvorrichtung (20), wobei die mindestens eine verbindbare Prozessinformationsvorrichtung (20) für die erste Controllervorrichtung (12) Prozessinformationen bereitstellt, die mit dem mindestens einen Anlagenprozess zusammenhängen, der in der Anlage läuft,
Erhalten von Konfigurationsinformationen von der mindestens einen verbindbaren Prozessinformationsvorrichtung (20), die mit der ersten Controllervorrichtung (12) gekoppelt ist, und
Aufrechterhalten einer ersten controllervorrichtungsseitigen Konfiguration von verbindbaren Prozessinformationsvorrichtungen, die mit der ersten Controllervorrichtung (12) gekoppelt sind, wobei die erste controllervorrichtungsseitige Konfiguration die Konfigurationsinformationen umfasst,
wobei die zweite Controllervorrichtung (14) ausgebildet ist zum:
Erhalten der ersten controllervorrichtungsseitigen Konfiguration (24) der ersten Controllervorrichtung (12) und Aufrechterhalten einer virtuellen verbindbaren Prozessinformationsvorrichtung (26), die mit der mindestens einen verbindbaren Prozessinformationsvorrichtung (20) zusammenhängt, die mit der ersten Controllervorrichtung (12) auf der Basis der ersten controllervorrichtungsseitigen Konfiguration gekoppelt ist,
Erhalten der Prozessinformationen, die durch die mindestens eine verbindbare Prozessinformationsvorrichtung (20) für die erste Controllervorrichtung bereitgestellt worden sind, von der ersten Controllervorrichtung (12),
Speichern, auf der virtuellen verbindbaren Prozessinformationsvorrichtung (26), der erhaltenen Prozessinformationen als virtuelle Prozessinformationen, die mit dem Anlagenprozess zusammenhängen,
Koppeln mit dem Anlagensteuerungssystem (10),
Verarbeiten der virtuellen Prozessinformationen, und
Bereitstellen der verarbeiteten Informationen, die mit dem mindestens einen Anlagenprozess zusammenhängen, für das Anlagensteuerungssystem (10).

2. System nach Anspruch 1, wobei die zweite Controllervorrichtung (14) zum Aufrechterhalten der virtuellen Prozessinformationen, die mit dem Prozess zusammenhängen, bis die virtuellen Prozessinformationen aktualisiert werden, ausgebildet ist.

3. System nach einem der vorhergehenden Ansprüche, wobei die erste Controllervorrichtung (12) und die zweite Controllervorrichtung (14) durch ein Netzwerk, insbesondere durch ein lokales Netzwerk, kommunikativ gekoppelt sind, und
die erste Controllervorrichtung (12) und die zweite Controllervorrichtung (14) einen Topologieverwalter umfassen, der zum Identifizieren von weiteren Controllervorrichtungen (12, 14, 16, 18) in dem lokalen Netzwerk und zum Speichern von Informationen bezüglich der identifizierten weiteren Controllervorrichtungen ausgebildet ist.

4. System nach Anspruch 3, wobei der Topologieverwalter zum Aktualisieren der gespeicherten Informationen bezüglich der identifizierten weiteren Controllervorrichtungen nach dem Erfassen einer Änderung in dem lokalen Netzwerk und/oder nachdem ein Zeitraum vergangen ist, ausgebildet ist.

5. System nach Anspruch 3 oder 4, wobei der Topologieverwalter der zweiten Controllervorrichtung (14) zum Erhalten der ersten controllervorrichtungsseitigen Konfiguration auf der Basis der Informationen bezüglich der identifizierten weiteren Controllervorrichtungen ausgebildet ist.

6. System nach einem von Anspruch 1 oder 2, wobei die erste Controllervorrichtung (12) und die zweite Controllervorrichtung (14) mit einem Dienst auf Cloud-Basis (30) kommunikativ gekoppelt sind, der Informationen bezüglich Controllervorrichtungen speichert, die mit dem Dienst auf Cloud-Basis kommunikativ gekoppelt sind, und
wobei die erste Controllervorrichtung (12) zum Bereitstellen der ersten controllervorrichtungsseitigen Konfiguration für den Dienst auf Cloud-Basis (30) ausgebildet ist.

7. System nach Anspruch 6, wobei die zweite Controllervorrichtung (14) zum Erhalten der ersten controllervorrichtungsseitigen Konfiguration von dem Dienst auf Cloud-Basis (30) ausgebildet ist.

8. System nach einem der Ansprüche 1 bis 7, wobei die erste Controllervorrichtung (12) zum Koppeln mit der mindestens einen verbindbaren Prozessinformationsvorrichtung (20) über Kopplungsmittel ausgebildet ist, die von einem lokalen Netzwerk oder einem Weitbereichsnetzwerk verschieden sind.

9. System nach einem der Ansprüche 3 bis 8, wobei die Informationen bezüglich der identifizierten weiteren Controllervorrichtungen Adressinformationen der weiteren Controllervorrichtungen umfassen.

## Revendications

1. Système de dispositifs de contrôleur (12, 14) pour un système de commande d'usine (10) commandant au moins un processus d'usine s'exécutant dans au moins une usine, le système comprenant :
des premier et second dispositifs de contrôleur (12, 14) couplés de manière communicative l'un à l'autre,
dans lequel le premier dispositif de contrôleur (12) est configuré pour :
interfacer avec au moins un dispositif d'informations de processus connectable (20), l'au moins un dispositif d'informations de processus connectable (20) fournissant au premier dispositif de contrôleur (12) des informations de processus associées à l'au moins un processus d'usine s'exécutant dans l'usine,
obtenir des informations de configuration de l'au moins un dispositif d'informations de processus connectable (20) interfaçant avec le premier dispositif de contrôleur (12), et
maintenir une configuration côté premier dispositif de contrôleur de dispositifs d'informations de processus connectables interfaçant avec le premier dispositif de contrôleur (12), dans lequel la configuration côté premier dispositif de contrôleur comprend les informations de configuration,
dans lequel le second dispositif de contrôleur (14) est configuré pour :
obtenir la configuration côté premier dispositif de contrôleur (24) du premier dispositif de contrôleur (12) et pour maintenir un dispositif d'informations de processus connectable virtuel (26) associé à l'au moins un dispositif d'informations de processus connectable (20) interfaçant avec le premier dispositif de contrôleur (12) en fonction de la configuration côté premier dispositif de contrôleur,
obtenir du premier dispositif de contrôleur (12) les informations de processus fournies par l'au moins un dispositif d'informations de processus connectable (20) au premier dispositif de contrôleur,
stocker, sur le dispositif d'informations de processus connectable virtuel (26), les informations de processus obtenues en tant qu'informations de processus virtuelles associées au processus d'usine,
interfacer avec le système de commande d'usine (10),
traiter les informations de processus virtuelles, et
fournir au système de commande d'usine (10) les informations traitées associées à l'au moins un processus d'usine.

2. Système selon la revendication 1, dans lequel le second dispositif de contrôleur (14) est configuré pour maintenir les informations de processus virtuelles associées au processus jusqu'à mise à jour des informations de processus virtuelles.

3. Système selon l'une quelconque des revendications précédentes, dans lequel le premier dispositif de contrôleur (12) et le second dispositif de contrôleur (14) sont couplés de manière communicative par un réseau, notamment par un réseau local, et
le premier dispositif de contrôleur (12) et le second dispositif de contrôleur (14) incluent un gestionnaire de topologie configuré pour identifier d'autres dispositifs de contrôleur (12, 14, 16, 18) dans le réseau local et pour stocker des informations concernant les autres dispositifs de contrôleur identifiés.

4. Système selon la revendication 3, dans lequel le gestionnaire de topologie est configuré pour mettre à jour les informations stockées concernant les autres dispositifs de contrôleur identifiés dès la détection d'un changement dans le réseau local et/ou qu'une période de temps s'est écoulée.

5. Système selon la revendication 3 ou 4, dans lequel le gestionnaire de topologie du second dispositif de contrôleur (14) est configuré pour obtenir la configuration côté premier dispositif de contrôleur en fonction des informations concernant les autres dispositifs de contrôleur identifiés.

6. Système selon l'une quelconque de la revendication 1 ou 2, dans lequel le premier dispositif de contrôleur (12) et le second dispositif de contrôleur (14) sont couplés de manière communicative à un service cloud (30) stockant des informations concernant des dispositifs de contrôleur couplés de manière communicative au service cloud, et
dans lequel le premier dispositif de contrôleur (12) est configuré pour fournir la configuration côté premier dispositif de contrôleur au service cloud (30).

7. Système selon la revendication 6, dans lequel le second dispositif de contrôleur (14) est configuré pour obtenir du service cloud (30) la configuration côté premier dispositif de contrôleur.

8. Système selon l'une quelconque des revendications 1 à 7, dans lequel le premier dispositif de contrôleur (12) est configuré pour interfacer avec l'au moins un dispositif d'informations de processus connectable (20) par le biais de moyens d'interfaçage qui sont différents d'un réseau local ou réseau étendu.

9. Système selon l'une quelconque des revendications 3 à 8, dans lequel les informations concernant les autres dispositifs de contrôleur identifiés comprennent des informations d'adresse des autres dispositifs de contrôleur.
